Europäisches Patentamt

European Patent Office

Office européen des brevets

(11) Veröffentlichungsnummer: **0 019 731**
**B1**

(12) **EUROPÄISCHE PATENTSCHRIFT**

(45) Veröffentlichungstag der Patentschrift :
05.10.83

(51) Int. Cl.³ : **G 01 N 27/48**

(21) Anmeldenummer : 80102296.3

(22) Anmeldetag : 28.04.80

(54) **Polarographischer Messfühler für die Bestimmung des Sauerstoffgehaltes in Gasen, insbesondere in Abgasen von Verbrennungsmotoren.**

(30) Priorität : 31.05.79 DE 2922131

(43) Veröffentlichungstag der Anmeldung :
10.12.80 Patentblatt 80/25

(45) Bekanntmachung des Hinweises auf die Patenterteilung : 05.10.83 Patentblatt 83/40

(84) Benannte Vertragsstaaten :
DE FR GB IT SE

(56) Entgegenhaltungen :
DE A 1 957 797
DE A 2 341 256
DE A 2 711 880
DE B 2 255 382
GB A 1 104 704

(73) Patentinhaber : ROBERT BOSCH GMBH
Postfach 50
D-7000 Stuttgart 1 (DE)

(72) Erfinder : Müller, Klaus, Dr.
Schillerstrasse 41
D-7146 Tamm (DE)
Erfinder : Friese, Karl-Hermann, Dr., Dipl.-Phys.
Strohgäu Strasse 13
D-7250 Leonberg (DE)

# Polarographischer Meßfühler für die Bestimmung des Sauerstoffgehaltes in Gasen, insbesondere in Abgasen von Verbrennungsmotoren

## Stand der Technik

Die Erfindung geht aus von einem polarographischen Meßfühler nach der Gattung des Anspruchs 1. Bei derartigen polarographischen Meßfühlern, die nach dem Diffusionsgrenzstrom-Prinzip arbeiten, wird dieser Diffusionsgrenzstrom bei einer konstanten, an den beiden Elektroden des Meßfühlers anliegenden Spannung gemessen. Dieser Strom ist in einem mager eingestellten Meßgas ($\lambda > 1$) von der Sauerstoffkonzentration abhängig, solange die Diffusion des Gases zur Kathode die Geschwindigkeit der ablaufenden Reaktion bestimmt.

Unter diesen Bedingungen mißt man Grenzströme, die dann konzentrationsabhängig sind. Es sind bereits derartige Meßfühler bekannt (DE-A-19 54 663), bei denen die Kathode dem zu messenden Gas, die Anode dagegen einem Vergleichsgas bekannten Sauerstoffgehaltes ausgesetzt sind. Derartige Meßfühler sind, insbesondere bei einem Einsatz für die Abgase von Verbrennungsmotoren, verhältnismäßig kompliziert im Aufbau, so daß man sich, vor allem für eine Fertigung in großen Stückzahlen, nach einem einfacheren Aufbau des Meßfühlers umsehen sollte. In diesem Zusammenhang ist bereits vorgeschlagen worden (DE-A-1 954 663, Fig. 4), einen solchen polarographischen Meßfühler in der Weise aufzubauen, daß sowohl Anode als auch Kathode in dem zu messenden Gas ausgesetzt sind. Dies führt zu einem wesentlich einfacheren Aufbau des Meßfühlers, da beispielsweise die Probleme der gasdichten Abgrenzung zweier Gasräume nicht gelöst zu werden brauchen. Diese Meßfühler, bei denen, wie auch bei den oben genannten, Anode und Kathode üblicherweise aus dem gleichen Material bestehen, haben jedoch den Nachteil, daß, beispielsweise im Falle der Abgase von Verbrennungsmotoren, keine Unterscheidung möglich ist, ob der Lambda-Wert des Abgases bei Werten kleiner als 1 (fett) oder bei Werten größer als 1 (mager) liegt. Dies hängt damit zusammen, daß sowohl bei magerer als auch bei fetter Abgaszusammensetzung ein Grenzstrom beobachtet werden kann, wobei im mageren Bereich die kathodische Reduktion von Sauerstoff, im fetten Bereich dagegen die anodische Oxidation oxydierbarer Abgasbestandteile begrenzt wird. Daher kann bei einem Meßfühler, der zwei vergleichbare Elektroden — z. B. katalytisch aktive Platinelektroden — aufweist, die beide in dem zu messenden Gas angeordnet sind, aus dem Grenzstromsignal nicht abgeleitet werden, ob ein fettes oder ein mageres Gemisch vorliegt, m.a.W. ob tatsächlich durch das Grenzstromsignal eine Sauerstoffkonzentration gemessen wird.

Die Anordnung einer als Diffusionsbarriere fungierenden Deckschicht aus porösem Material auf der Kathode eines diffusionsstrombegrenzten Sauerstoff-Fühlers ist aus DE-A-2 711 880 bekannt.

## Vorteile der Erfindung

Der erfindungsgemäße polarographische Meßfühler mit dem kennzeichnenden Merkmal des Anspruchs 1 hat demgegenüber den Vorteil, daß eine eindeutige Unterscheidung möglich ist, ob das gemessene Gas, insbesondere das Abgas eines Verbrennungsmotors, einen Lambda-Wert kleiner als 1 oder einen solchen größer als 1 aufweist. Voraussetzung dafür ist, daß sich das gemessene Gas nicht im thermodynamischen Gleichgewicht befindet und einen endlichen Anteil an freiem Sauerstoff enthält. Da mit einem solchen Meßfühler normalerweise nur der Sauerstoffgehalt im mageren Bereich des Abgases gemessen werden soll, kann man mit einer nicht zur Erfindung gehörenden elektronischen Schaltung erreichen, daß nur solche Grenzstromsignale ausgewertet werden, die von einem mageren Abgasgemisch hervorgerufen werden.

Durch die in dem abhängigen Anspruch 2 angeführten Maßnahmen sind vorteilhafte Weiterbildungen und Verbesserungen des im Anspruch 1 angegebenen Meßfühlers möglich.

## Zeichnung

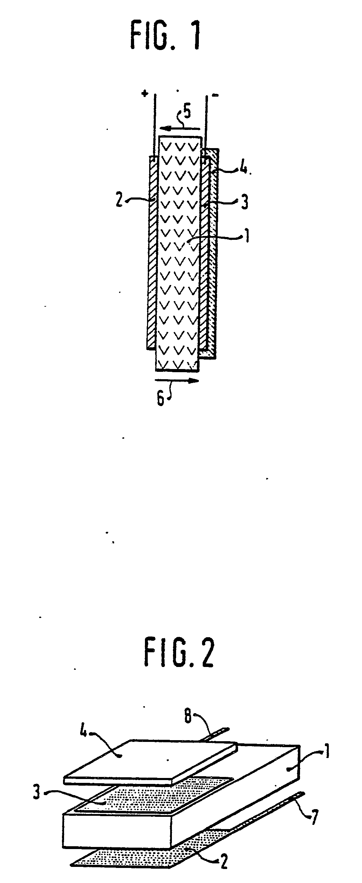

Das Prinzip der Erfindung sowie ein Ausführungsbeispiel desselben sind in der Zeichnung dargestellt und in der nachfolgenden Beschreibung näher erläutert. Es zeigen Fig. 1 eine Skizze zur Erläuterung des Prinzips der Erfindung und Fig. 2 eine perspektivische Darstellung der funktionswichtigen Teile eines erfindungsgemäßen Meßfühlers.

## Beschreibung des Prinzips und des Ausführungsbeispiels

Gemäß der Prinzipsskizze nach Fig. 1 besteht der erfindungsgemäße Meßfühler aus einem sauerstoffionenleitenden Festelektrolyten 1 mit einer Anode 2 und einer Kathode 3, wobei die Kathode 3 eine poröse, keramische Schicht 4 als Diffusionsschicht aufweist. An die Anode 2 ist der positive Pol und an die Kathode 3 der negative Pol einer nicht dargestellten Spannungsquelle angeschlossen. Die Kathode 3 besteht aus einem die Einstellung des thermodynamischen Gasgleichgewichtes katalysierenden Material, während die Anode 2 aus einem die Einstellung dieses Gleichgewichtes nicht katalysierenden Material besteht. Beide Elektroden sind mit dem zu messenden Gas in Berührung. Aufgrund der angelegten Spannung wandern innerhalb des Festelektrolyten 1 Sauerstoffionen in der mit dem Pfeil 5 angedeuteten Richtung, so daß sich dadurch ein Stromfluß im Außenkreis ergibt. Arbeitet der Meßfühler im Bereich des Diffusionsgrenzstromes, was weitgehend von der Auslegung der Diffusionsbarriere 4 abhängt, so ist dieser Stromfluß abhängig von der herrschenden Sauerstoffkonzentration. Aufgrund der Tatsache, daß die Anode 2 katalytisch inaktiv ist, herrscht an dieser auch im fetten Bereich ($\lambda < 1$) noch ein relativ großer Sauerstoffpartialdruck, da der Sauerstoff in dem Gasgemisch durch die fehlende katalytische Aktivität der Anode nicht so weit umgesetzt wird, wie es dem thermodynamischen Gleichgewichtszustand entspricht. Da die Kathode 3 demgegenüber katalytisch aktiv ist, befindet sich das Gas an der Kathode stets im thermodynamischen Gleichgewicht, so daß der Sauerstoffpartialdruck an der Kathode 3 kleiner ist als an der Anode 2. Gemäß dieser Partialdruckdifferenz exisitiert zwischen den beiden Elektroden 2 und 3 für $\lambda <$ eine Potentialdifferenz von einigen hundert mV, wobei Sauerstoffionen aufgrund dieser Potentialdifferenz innerhalb des Festelektrolyten 1 in der mit dem Pfeil 6 angedeuteten Richtung wandern, die der Wanderungsrichtung aufgrund der angelegten Spannung, wie sie mit dem Pfeil 5 angedeutet ist, entgegengerichtet ist. Es tritt daher eine Meßspannung auf, die sich ergibt aus der angelegten Spannung, vermindert um die aufgrund der Partialdruckdifferenz erzeugten Potentialdifferenz. Beim Übergang von fett nach mager, d. h. $\lambda = 1$, wird die Partialdruckdifferenz zwischen den Elektroden 2 und 3 sprungartig kleiner, da in dem Bereich $\lambda > 1$ die Elektrodenpotentiale nur noch wenig vom Sauerstoff-Partialdruck abhängen und durch den dann in dem zu messenden Gas herrschenden Sauerstoffüberschuß nur geringfügig unterschiedliche Sauerstoffpartialdrücke an beiden Elektroden 2 und 3 herrschen. Dadurch nimmt auch die Potentialdifferenz zwischen den Elektroden 2 und 3 sprungartig ab, so daß sich die Meßspannung ebenso sprungartig erhöht. Diese Verhältnisse werden in den folgenden Gleichungen nochmals dargestellt :

$$\left. \begin{array}{l} \lambda < 1 : U_{\lambda<1} = U_G - U_{\lambda 1} \\ \lambda > 1 : U_{\lambda>1} = U_G - U_{\lambda 2} \end{array} \right\} \ U_{\lambda 1} \gg U_{\lambda 2}$$
$$\text{so daß } U_{\lambda<1} \ < U_{\lambda>1},$$

wobei $U_{\lambda<1}$ die Meßspannung bei $\lambda < 1$ bedeutet, $U_{\lambda>1}$ die Meßspannung bei $\lambda > 1$, $U_G$ die an die Elektroden 2 und 3 angelegte Spannung, $U_{\lambda 1}$ das zwischen den beiden Elektroden 2 und 3 herrschende Potential bei $\lambda < 1$ und $U_{\lambda 2}$ das entsprechende Potential bei $\lambda > 1$. Da also die Meßspannung im fetten Bereich kleiner ist als die Meßspannung im mageren Bereich, ist nunmehr eine eindeutige Unterscheidung zwischen einem fetten und einem mageren Gemisch möglich. Will man daher nur die Grenzstromsignale verarbeiten, die von der Messung der Sauerstoffkonzentration im mageren Bereich herstammen, so muß man dafür sorgen, daß nur die bei der höheren Meßspannung erhaltenen Grenzstromsignale berücksichtigt werden. Hierzu ist es notwendig, außer einer Strommessung auch noch eine Spannungsmessung vorzunehmen. In Fig. 2 sind die funktionswesentlichen Bestandteile des erfindungsgemäßen Meßfühlers in perspektivischer Form auseinandergezogen dargestellt. Gleiche Teile sind mit den gleichen Bezugsziffern wie in der Prinzipsskizze nach Fig. 1 bezeichnet. Der Meßfühler besteht aus einem Plättchen 1 von etwa 1 mm Dicke aus stabilisiertem Zirkondioxid als sauerstoffionenleitender Festelektrolyt. Auf der einen Seite dieses Plättchens 1 wird eine Anode 2 in Form einer ca. 10 μm dicken Schicht aus Gold durch Aufdampfen oder Aufdrucken einer entsprechenden Paste aufgebracht. Die Anode 2 bedeckt nur etwa die Hälfte des Plättchens 1 und nur eine Leiterbahn 7 führt an das andere Ende des Plättchens. Auf der der Anode 2 gegenüberliegenden Seite wird eine Kathode 3 aus Platin, ebenfalls in einer Dicke von ca. 10 μm, durch Aufdampfen oder Aufdrucken einer entsprechenden Paste aufgebracht. Auch die Kathode 3 bedeckt, wie die Anode 2, nur etwa die Hälfte des Plättchens, während eine Leiterbahn 8 an das andere Ende geführt wird. Unter eine der Leiterbahnen 7 oder 8 wird zweckmäßigerweise eine elektrisch isolierende Schicht, z. B. eine $Al_2O_3$-Schicht aufgetragen, um Leckströme zwischen den Leiterbahnen zu unterdrücken. Auf der Kathode 3 ist eine Diffusionsschicht 4 von etwa 15 μm Dicke derart angeordnet, daß das Gas nur durch diese Diffusionsschicht hindurch an die Kathode 3 gelangen kann. Die Diffusionsschicht 4 besteht beispielsweise ebenfalls aus Zirkondioxid und kann, wie die Elektroden 2 und 3, durch Aufdrucken einer entsprechenden Paste aufgebracht werden. An die Leiterbahnen 7 und 8 wird eine Gleichspannungsquelle von etwa 1 V angeschlossen und die zwischen den Leiterbahnen 7 und 8 herrschende Spannung sowie der in dem Stromkreis fließende Strom in eine nicht dargestellte Auswerteelektronik gegeben. Der so entstandene Meßfühler wird in eine Halterung derart eingebaut, daß der Teil des Plättchens 1 mit den Elektroden 2 und 3 und der Diffusionsbarriere 4 in das zu messende Gas hineinragen.

**Ansprüche**

1. Diffusionsstrombegrenzter polarographischer Meßfühler für die Bestimmung des Sauerstoffgehaltes von sich nicht im thermodynamischen Gleichgewicht befindlichen Gasen, insbesondere von Abgasen von Verbrennungsmotoren, mit einem sauerstoffionenleitenden Festelektrolytkörper (1), der eine Anode (2) und eine Kathode (3) trägt, wobei die Anode (2) und die Kathode (3) dem zu messenden Gas ausgesetzt sind und die Kathode (3) aus einem bezüglich der Einstellung des thermodynamischen Gleichgewichtes der untersuchten Gase katalytisch aktiven Material besteht, dadurch gekennzeichnet, daß die Anode (2) aus einem katalytisch inaktiven Material besteht, und daß die Kathode (3) durch eine Poren oder Kanäle enthaltende Schicht (4) als Diffusionsbarriere bedeckt ist.

2. Meßfühler nach Anspruch 1, dadurch gekennzeichnet, daß die Kathode (3) aus Platin oder einem anderen Platinmetall oder einer Platinmetall-Legierung und die Anode (2) aus Gold, einer Goldlegierung, Silber, einer Silberlegierung, einem Perowskit wie solchen auf der Basis von La-Co-Mischoxiden oder aus einem Gemisch aus zwei oder mehreren der genannten Komponenten besteht.

## Claims

1. A diffusion current limited polarographic sensor for determining the oxygen content of gases which are not in thermodynamic balance, especially exhaust gases of combustion engines, comprising an oxygen conducting body of solid electrolyte (1) which supports an anode (2) and a cathode (3), wherein the anode (2) and the cathode (3) consist of a material catalytically active with respect to the setting of the thermodynamic balance, characterised in that, the anode (2) consists of a catalytically inactive material and that the cathode (3) is covered by a porous or channel containing layer (4) in the form of a diffusion barrier.

2. A sensor according to claim 1, characterised in that, the cathode (3) consists of platinum or another platinum metal or a platinum metal alloy and the anode (2) consists of gold, a gold alloy, silver, a silver alloy, a perowskite such as that based on La-Co mixed oxides or of a mixture of two or more of the said components.

## Revendications

1. Capteur de mesure polarographique à courant limite de diffusion pour déterminer la teneur en oxygène dans des gaz qui ne sont pas à l'équilibre thermodynamique notamment des gaz d'échappement de moteurs à combustion interne, avec un corps (1) en électrolyte solide conducteur d'ions d'oxygène, portant une anode (2) et une cathode (3), l'anode 2 et la cathode (3) étant exposées aux gaz à mesurer et la cathode (3) étant en un matériau actif sur le plan catalytique pour régler l'équilibre thermodynamique des gaz à examiner, caractérisé en ce que l'anode (2) est en un matériau inactif sur le plan catalytique et en ce que la cathode (3) est revêtue d'une couche (4) comportant des pores ou des canaux et formant une barrière de diffusion.

2. Capteur de mesure selon la revendication 1, caractérisé en ce que la cathode (3) est en platine ou en un autre métal de type platine ou en un alliage de métal de type platine et l'anode (2) est en or, en un alliage d'or, en argent, en un alliage d'argent, en un Perowskit tels que ceux à base de mélanges d'oxydes La-Co- ou en un mélange de deux ou plusieurs des composants mentionnés ci-dessus.

## FIG. 1

## FIG. 2